**Europäisches Patentamt**

**European Patent Office**

**Office européen des brevets**

(19)

(11) Veröffentlichungsnummer: **0 147 709**
**B1**

(12) ## EUROPÄISCHE PATENTSCHRIFT

(45) Veröffentlichungstag der Patentschrift:
**27.04.88**

(21) Anmeldenummer: **84115043.6**

(22) Anmeldetag: **10.12.84**

(51) Int. Cl.⁴: **G 11 B 5/706,** H 01 F 1/11,
C 01 G 51/04, C 01 G 49/02

(54) **Verfahren zur Herstellung kobalthaltiger, isotroper magnetischer Eisenoxide und deren Verwendung.**

(30) Priorität: **16.12.83 DE 3345531**

(43) Veröffentlichungstag der Anmeldung:
**10.07.85 Patentblatt 85/28**

(45) Bekanntmachung des Hinweises auf die Patenterteilung:
**27.04.88 Patentblatt 88/17**

(84) Benannte Vertragsstaaten:
**DE FR GB NL**

(56) Entgegenhaltungen:
**DE-A-2 508 155**
**FR-A-2 157 896**
**FR-A-2 230 590**

**ZEITSCHRIFT FÜR ANORGANISCHE UND
ALLGEMEINE CHEMIE, Band 331, 1964, Seite 231; A.
KRAUSE et al.: "Die Herstellung eines
wasserfreien Kobalt(II)-ferrits CoFe2O4 auf nassem
Wege"**

(73) Patentinhaber: **BASF Aktiengesellschaft, Carl-
Bosch- Strasse 38, D-6700 Ludwigshafen (DE)**

(72) Erfinder: **Steck, Werner, Dr.- Chem., Auerstrasse
4, D-6700 Ludwigshafen (DE)**
Erfinder: **Jakusch, Helmut, Dr.- Phys., Lorscher
Ring 6 c, D-6710 Frankenthal (DE)**
Erfinder: **Marosi, Laszlo, Dr.- Chem.,
Leuschnerstrasse 32, D-6700 Ludwigshafen (DE)**

## Beschreibung

Die Erfindung betrifft ein Verfahren zur Herstellung kobalthaltiger isotroper magnetischer Eisenoxide der Formel $(Co_xFe_{1-x})O[Fe_2O_3]$ mit Werten für x von 0,08 bis 0,8 durch Umsetzung von nadelförmigem $\alpha$-FeOOH mit zweiwertigen Kobalt- und Eisenionen in alkalischem Medium in Inertgasatmosphäre.

Die Entwicklung der magnetischen Aufzeichnungsträger ist seit geraumer Zeit, insbesondere durch die Anforderungen bei der Daten- und Videosignalspeicherung, auf Aufzeichnungen in hoher Dichte gerichtet. Für diesen Zweck werden Aufzeichnungsmaterialien mit äußerst glatten Oberflächen auf der Basis von in organischen Bindemitteln feinverteilten magnetischen Materialien mit sehr hohen Koerzitivfeldstärken als besonders geeignet angesehen. Durch die mit der Erhöhung der Aufzeichnungsdichte verbundenen Verringerung der Aufzeichnungswellenlänge macht sich zunehmend die Verringerung der Ausgangsleistung durch Selbstentmagnetisierung der Aufzeichnungsschicht bemerkbar. Eine Verminderung der Entmagnetisierung ist zwar durch die Verringerung der Schichtdicke möglich. Doch sind dieser Maßnahme bei magnetische Pulver enthaltenden Bindemittelschichten aufweisenden Aufzeichnungsträgern sowohl hinsichtlich der Verringerung des vorhandenen magnetischen Materials pro Flächeneinheit, d.h. der remanenten Magnetisierung des Schichtelements als auch aus fertigungstechnischen Gründen Grenzen gesetzt. Ein anderer Weg, das Problem der geringen Schichtdicke bei dennoch ausreichender Magnetisierung zu beheben, wird mit Aufzeichnungsmaterialien auf der Basis von dünnen magnetischen Metallfilmen versucht. Hierbei treten jedoch neben den Problemen der Herstellung solcher homogener Metallschichten vor allem mechanische Probleme bei deren Benutzung auf.

Im Einblick auf die aufgezeigten Schwierigkeiten und im Bestreben dennoch magnetische Aufzeichnungssysteme, welche eine hohe Aufzeichnungsdichte bei hohen Ausgangspegeln aufwisen, bereitzustellen, wurde auch bereits vorgeschlagen, eine zum Aufzeichnungsträger senkrechte magnetische Aufzeichnung vorzunehmen. Hierzu müßten die Aufzeichnungsträger Schichten aufweisen, die zumindest in dem Schichtbereich, welcher dem Magnetkopf am nächsten lag, eine senkrechte Magnetisierung ermöglichte (US-PS 3 052 567). In der weiteren Entwicklung dieses Prinzips wurde eine Reihe unterschiedlicher magnetischer Schichten mit einer zur Trägerfläche senkrechten magnetischen Anisotropie, meist auf der Basis von Co/Cr-Schichten, untersucht. Jedoch konnten weder die Herstellung noch die erzielbaren Eigenschaften bisher befriedigen. Ein wesentliches Problem stellte aber auch die Entwicklung eines für die Aufzeichnungsverfahren geeigneten Magnetkopfes dar.

Ein anderer Weg zur Erhöhung der Aufzeichnungsdichte bei hoher Empfindlichkeit wurde in der Ausnutzung der Vertikalkomponente des für die Aufzeichnung verwendeten magnetischen Feldes gesehen. Hierbei wird die insbesondere bei hoher Aufzeichnungsdichte (kurzer Wellenlänge) wirksame Vertikalkomponente eines von einem Ringkopf auf der Oberfläche der magnetischen Schicht erzeugten magnetischen Feldes herangezogen. Als magnetische Materialien für solche Aufzeichnungssysteme eignen sich Produkte, die eine hohe relative Remanenz in allen Richtungen des Aufzeichnungsträgers ergeben. Hierfür eignen sich magnetische isotrope Materialien, insbesondere diejenigen, die auf der Basis der bekannten kubischen Eisenoxide, vor allem des würfelförmigen Magnetits aufgebaut sind. Die Herstellung dieses Magnetits ist bekannt, so z. B. ausgehend von $\alpha$-, $\beta$- oder $\gamma$-FeOOH zusammen mit $Fe(OH)_2$ (u.a. DE-OSen 25 08 155, 27 46 359, 25 08 085, JA-OS 36 932 (1983)). Auch die Herstellung von würfelförmigem Kobaltferrit aus Kobalthydroxid und $\gamma$-FeOOH ist bereits beschrieben worden (Krause et al., Z. f. anorg. Ch., Band 331, Seite 231 (1964)). Diese Materialien haben jedoch den Nachteil, daß sie sich entweder hinsichtlich der magnetischen Eigenschaften, insbesondere der Koerzitivfeldstärke oder aber bezüglich der Stabilität der magnetischen Eigenschaften bei thermischer oder mechanischer Belastung, nicht für die Anwendung bei magnetischen Aufzeichnungsträgern eignen.

Aufgabe der Erfindung war es daher, ein Verfahren zur Herstellung isotroper magnetischer Eisenoxide bereitzustellen, das sich einerseits in einfacher und wirtschaftlicher Weise mit gängigen Rohstoffen bewerkstelligen läßt und andererseits ein magnetisches Material liefert, das sich durch eine isotrope Magnetisierung, durch eine für Aufzeichnungsträger geeignete hohe Koerzitivfeldstärke und darüber hinaus vor allem besonders enge Schaltfeldstärkenverteilung der magnetisierbaren Einzelpartikel auszeichnet. Diese Eigenschaften sind vor allem für die magnetische Aufzeichnung in hoher Dichte von Bedeutung. Zur Lösung dieser Aufgabe bot sich der Einsatz von leicht zugänglichem Eisen(II)sulfat als Ausgangsmaterial und die Modifikation von isotropem Magnetit mit Kobalt an.

Es wurde nun gefunden, daß sich die gestellte Aufgabe durch ein Verfahren zur Herstellung kobalthaltiger isotroper magnetischer Eisenoxide der Formel $(Co_xFe_{1-x})O[Fe_2O_3]$ mit Werten für x von 0,08 bis 0,8 lösen läßt, wenn zur Herstellung dieses Materials $\alpha$-FeOOH in wäßriger Suspension mit Co(II)-Ionen und Fe(II)-Ionen bei pH-Werten von größer 9 unter Inertgas bei Temperaturen zwischen 50°C und dem Siedepunkt der Suspension bei Normaldruck umgesetzt wird.

Als Ausgangsmaterial für das erfindungsgemäße Verfahren wird das auf bekannte Weise erhaltene nadelförmige $\alpha$-FeOOH, das auch als Goethit bezeichnet wird, in Form der bei seiner Herstellung angefallenen Suspension eingesetzt.

Die Herstellung von $\alpha$-FeOOH ist bekannt. Hierzu wird aus einer Fe(II)-sulfatlösung mit Basen wie NaOH, KOH oder $NH_3$ zunächst ein Teil der in Wasser vorgelegten Fe(II)-Ionen als Fe(II)-hydroxid ausgefällt und danach bei Temperaturen zwischen 10 und 50°C, bei Anwesenheit von Phosphationen bis 70°C, mit sauerstoffhaltigen Gasen, bevorzugt Luft, zum $\alpha$-FeOOH oxidiert, bis der pH-Wert der Suspension unter 4 liegt.

2

0 147 709

Diese in erster Stufe erzeugten $\alpha$-FeOOH-Keime werden dann in einer zweiten Stufe bei Temperaturen zwischen 20 und 70°C, in Gegenwart von Phosphationen bis 80°C und bei einem pH-Wert von größer 4 bis 5,5 mit weiterem Fe(II)-sulfat durch kontinuierliche Zugabe einer Base und Durchleiten eines sauerstoffhaltigen Gases, bevorzugt Luft, zum $\alpha$-FeOOH-Endprodukt umgesetzt. Die Reaktion wird häufig solange durchgeführt, bis 1,2 bis 5 Gewichtsteile des Gesamtproduktes pro Gewichtsteil des Keimes gebildet worden sind.

Dieses sogenannte saure Herstellverfahren ist beispielsweise in der DE-PS 1 176 111, der DE-OS 15 92 398 oder der DE-AS 21 22 312 beschrieben.

Wird nun das vorstehend beschriebene Verfahren so durchgeführt, daß in der ersten Stufe etwa 2/3 der vorgelegten Fe(II)-Ionen-Menge zu $\alpha$-FeOOH-Keimen umgesetzt wird, so kann anschließend in einer zweiten Stufe unter Inertgasen bei erhöhter Temperatur und erhöhtem pH-Wert die restlichen Fe(II)-Ionen als Fe(OH)$_2$ gefällt, mit dem bereits gebildeten $\alpha$-FeOOH zu Fe$_3$O$_4$ umgesetzt werden. Diese Umsetzung von

$2 \alpha\text{-FeOOH} + \text{Fe(OH)}_2 \rightarrow \text{Fe}_3\text{O}_4 + \text{H}_2\text{O}$ ist bereits in den DE-OSen 25 08 085 und 25 18 283 beschrieben. Der so erhaltene Magnetit weist nur eine geringe Koerzitivfeldstärke auf und besitzt deshalb nicht die aufgabengemäß geforderten Eigenschaften.

Gemäß dem erfindungsgemäßen Verfahren werden nun in der ersten, der sogenannten Keimbildungsstufe zunächst 60 bis 70 Gew.-% der vorgelegten Me(II)-Salze, Fe(II)- und gegebenenfalls Co(II)-Sulfat, durch Zusatz einer Base wie NaOH oder KOH als Hydroxide ausgefällt. In einer Ausführungsform des erfindungsgemäßen Verfahrens werden vorteilhafterweise Co(II)- und Fe(II)-Ionen gemeinsam vorgelegt. Nach der Oxidation des dann bereits kobalthaltigen Fe(II)-Hydroxids zu gegebenenfalls bereits Co-haltigem $\alpha$-FeOOH bei Temperaturen bis 70°C und bis zu einem pH-Wert von kleiner als 4 wird danach, gegebenenfalls unter erster oder weiterer Co(II)-Ionen-Zugabe die Umsetzung zu $(\text{Co}_x\text{Fe}_{1-x})\text{O}[\text{Fe}_2\text{O}_3]$ vorgenommen. Dies geschieht im weiteren innerhalb 10 Minuten bis etwa 8 Stunden bei Temperaturen von größer als 50°C und bei pH-Werten von größer als 9, vorzugsweise größer 10 in Inertgasatmosphäre, z. B. N$_2$ oder Edelgase.

Die Umsetzung kann in einfacher Weise in heizbaren Rührbehältern erfolgen, die vorteilhafterweise mit einem Rückflußkühler ausgerüstet sein können. Die Inertisierung der Reaktionsmischung erfolgt durch Einleiten von und/oder Abdecken mit Inertgasen. Ziel der Inertisierung ist der Ausschluß von gasförmigen Oxidationsmitteln, vornehmlich Luftsauerstoff, da diese im alkalischen Milieu besonders leicht die hier unerwünschte Oxidation der Me(II)-Ionen zu Me(II)-Ionen bewirken können.

Nach beendeter Reaktion wird das zumeist dunkel bis schwarz-gefärbte Reaktionsgemisch an der Luft oder unter Inertisierung filtriert und mit Wasser gewaschen. Der gewaschene Filterkuchen wird dann bei Temperaturen zwischen 50 und 350°C, bevorzugt in nicht oxidierender Atmosphäre, getrocknet.

Das auf diese Weise erhaltene magnetische Material besteht aus isotropen Teilchen der angegebenen Formel. Isotrop bedeutet im vorgegebenen Zusammenhang, daß die Teilchen weitgehend würfelförmig sind, d.h. im statistischen Mittel alle drei Raumachsen weitgehend gleich groß sind und im einzelnen höchstens Längen-zu-Dicken-Verhältnisse bis zu 2 : 1 festzustellen sind.

Die erfindungsgemäß hergestellten magnetischen Eisenoxide lassen sich in bekannter Weise mit oxidierenden Gasen, wie z. B. Sauerstoff oder Luft, bei Temperaturen zwischen 120° und 450°C oxidieren. Abhängig von der jeweiligen Oxidationstemperatur haben sich Oxidationszeiten zwischen 10 Minuten und 6 Stunden als zweckmäßig erwiesen. Bei vollständiger Oxidation entsteht ein Pulver zusammengesetzt aus Kobaltferrit und Co-modifiziertem Gamma-Eisen(III)oxid. Dabei läßt sich die genaue Strukturformel nicht angeben, da sich nicht zweifelsfrei festlegen läßt, wieviel der Kobalt(II)-Ionen sich im Gitter der Gamma-Eisen(III)oxidphase gelöst haben bzw. eingeschlossen sind. Bei nur teilweiser Oxidation kommt als dritte Phase noch Kobalt-modifizierter Magnetit hinzu.

Weiterhin lassen sich die magnetischen Eisenoxide, hergestellt nach dem erfindungsgemäßen Verfahren, in ihren magnetischen Eigenschaften, z. B. der spezifischen Magnetisierung oder zur Erhöhung der Kristallitgröße in an sich bekannter Weise in einer reduzierenden Atmosphäre, wie z. B. Wasserstoff und/oder Kohlenmonoxid und/oder mittels organischer Substanzen, die sich in Gegenwart von Eisenoxiden zersetzen, nachbehandeln. Zur Vermeidung einer Reduktion zu metallischen Phasen ist die gleichzeitige Anwesenheit von Wasserdampf zweckmäßig. Die Nachbehandlung erfolgt üblicherweise innerhalb von 10 Minuten bis 2 Stunden bei 250 bis 600°C.

Außerdem eignen sich die magnetischen Eisenoxide gemäß der Erfindung in besonderem Maße als Ausgangsmaterial für die Herstellung von kobalthaltigen Eisenteilchen, welche gleichfalls als magnetische Materialien bei der Herstellung von magnetischen Aufzeichnungsträgern Verwendung finden. Dabei erfolgt die Herstellung der Metallteilchen in an sich bekannter Weise. Die bekannten Verfahren der Stabilisierung, insbesondere der Formstabilisierung, z. B. mit Sn(II)-Ionen gemäß DE-OS 19 07 691, mit Erdalkalikationen gemäß den DE-OSen 24 34 058 und 24 34 096, mit Phosphationen gemäß DE-OS 26 46 348, mit gleichzeitiger Verwendung anorganischer und organischer Substanzen gemäß DE-OS 32 28 669 und mit Silikaten/SiO$_2$ gemäß den JP-OSen 121799/77 und 153198/77, wie auch die der Passivierung der pyrophoren Metallteilchen lassen sich hierbei in gleicher Weise, wie aus dem Stand der Technik bekannt, heranziehen.

Schließlich sei noch darauf hingewiesen, daß sich die erfindungsgemäß hergestellten isotropen magnetischen Eisenoxide auch zur Verwendung als Druckfarbenpigmente oder zur Herstellung magnetischer Toner eignen.

Wesentlicher Verwendungszweck der erfindungsgemäß hergestellten kobalthaltigen isotropen magnetischen Eisenoxide stellt der Einsatz als magnetisches Material bei der Herstellung von magnetischen Aufzeichnungsträgern dar. Mit ihnen lassen sich die von Koerzitivfeldstärke und Schaltfeldstärkenverteilung

3

beeinflußten Aufzeichnungseigenschaften in überraschender Weise vorteilhaft verändern. Mit ihrer hohen relativen Remanenz in allen drei orthogonalen Richtungen lassen sie sich besonders vorteilhaft bei der Herstellung solcher magnetischer Aufzeichnungsträger heranziehen mit welchen die Vorteile der Aufzeichnung mittels der wirksamen Vertikalkomponente zur Erhöhung von Bilddichte und zur Sicherung hoher Frequenzen ausgenutzt werden sollen.

Die Herstellung der Aufzeichnungsträger geschieht in an sich bekannter Weise. Hierzu werden die magnetischen Materialien in polaren Bindemitteln dispergiert. Als Bindemittel eignen sich die für diesen Zweck bekannten Verbindungen, wie Homo- und Mischpolymerisate von Polyvinylderivaten, Polyurethanen, Polyestern und ähnliche. Die Bindemittel werden in Lösungen in geeigneten organischen Lösungsmitteln verwendet, die gegebenenfalls weitere Zusätze enthalten können. Die magnetischen Schichten werden auf starre oder biegsame Träger wie Platten, Folien und Karten aufgebracht.

Die vorliegende Erfindung wird anhand folgender Beispiele im Vergleich zu Versuchen nach dem Stand der Technik erläutert. Die magnetischen Werte der Pulverproben wurden mit einem Schwingmagnetometer bei einem magnetischen Feld von 160 kA/m oder nach Vormagnetisierung im Impulsmagnetisierer in einem Schwingmagnetometer gemessen. Die Werte der Koerzitivfeldstärke, $H_c$, gemessen in [kA/m], wurden bei den Pulvermessungen auf eine Stopfdichte von $\zeta = 1.2$ g/cm$^3$ bei den Oxiden und $\zeta = 1.6$ g/cm$^3$ bei den Metallpigmenten bezogen. Spezifische Remanenz ($M_r/\zeta$) und Sättigung ($M_m/\zeta$) sind jeweils in [nTm$^3$] angegeben. Die Sättigungsmagnetisierung bzw. Remanenz von Bändern werden in [mT] angegeben.

Die Schaltfeldstärkenverteilung (SFD, switching field distribution) ist ein Maß für die magnetische Einheitlichkeit einer i.a. aus magnetisierbaren Einzelpartikeln bestehenden Speicherschicht. Sie gibt den Magnetfeldbereich an, in dem die Einzelpartikel umschalten. Die Schaltfeldstärkenverteilung einer magnetischen Aufzeichnungsschicht spielt bei der Speicherung kurzer Wellenlängen bzw. hoher Frequenzen eine entscheidende Rolle. Eine enge SFD verringert die Übergangslänge zwischen entgegengesetzt magnetisierten Bereichen und erlaubt so eine hohe Aufzeichnungsdichte.

Als Meßgröße für SFD wird (1-S*) herangezogen. (1-S*) wird aus der Steilheit der Hysteresekurve bei M = 0 (d.h. Hc) gemäß der Formel $dM/dH = M_R/((1-S^*).Hc)$ gewonnen (M.L. Williams, R.L. Comstock, AIP Conf. Proc. 5, 738 (1971).

## Beispiel 1

In einem 10-l-Glasgefäß, versehen mit Rückflußkühler, Rührer und pH-Elektrode, wurden 1167 g FeSO$_4$.7 H$_2$O und 83,9 g CoSO$_4$.7 H$_2$O unter Rühren mit Wasser zu einem Gesamtvolumen von 6 l-Lösung aufgelöst und mit 3,2 ml konz. H$_2$SO$_4$ versetzt. Dann wurden 5,4 g NaH$_2$PO$_4$.2 H$_2$O hinzugefügt. Gleichzeitig wurde die Lösung mit 300 Nl/h Stickstoff begast und eine Temperatur von 40°C eingestellt. Dann wurden 1235 ml einer 15,3 %-igen Natronlauge in 10 Minuten zugegeben. Der Ausfällgrad betrug 63 %, bezogen auf Me(II). Nun wurden anstelle von Stickstoff 600 Nl/h Luft eingeleitet, bis der pH-Wert nach 200 Minuten auf kleiner als 4 abgefallen war. Anstelle von Luft wurde nun erneut Stickstoff (300 Nl/h) eingeleitet und 10 Minuten bei 40°C weiter gerührt. Mit konzentrierter Natronlauge wurde nunmehr der pH-Wert auf 12 angehoben und dann die Partikelsuspension innerhalb 110 Minuten auf 80°C aufgeheizt und weitere 180 Minuten auf dieser Temperatur gehalten. Danach wurde die Heizung abgestellt und die Suspension auf 22°C abgekühlt. Nach der Filtration und dem Waschen wurde der Filterkuchen bei 50°C im Vakuumtrockenschrank getrocknet. Das resultierende Material war (Co$_x$Fe$_{1-x}$)O[Fe$_2$O$_3$] mit x = 0,18 (Probe 1A).

Die Hälfte der Probe 1A wurde bei 350°C mit 50 Nl Luft/h innerhalb 30 Minuten zur Probe 1B oxidiert.

Die zweite Hälfte der Probe 1A wurde zunächst mit 100 Nl/h Wasserstoff innerhalb 30 Minuten bei 350°C nachbehandelt. Zur Vermeidung der hier unerwünschten Bildung metallischer Phasen wurde der Wasserstoffstrom zuvor durch Wasser von 60°C geleitet. Die mit H$_2$ nachbehandelte Probe wurde wie Probe 1B zur Probe 1C oxidiert.

Die Meßergebnisse für die Proben 1A bis 1C sind in Tabelle 1 angegeben.

## Tabelle 1

| Probe | Hc$_{1,2}$ | Mm/ρ | Mr/ρ | SFD |
|-------|------------|------|------|-----|
| 1A | 37,8 | 86 | 50 | 0,52 |
| 1B | 52,8 | 68 | 52 | 0,41 |
| 1C | 49,8 | 79 | 60 | 0,41 |

## Beispiel 2

Jeweils 5 g der Proben 1A bzw. 1B wurden bei 320°C innerhalb von 8 Stunden in einen Wasserstoffstrom von 30 Nl/h in einem Glasdrehrohr zu dem pyrophoren Metallpigment 1AM bzw. 1BM reduziert. Die Passivierung zu den Proben 1AMP und 1BMP erfolgte durch Befeuchten mit Aceton in Gegenwart von Sauerstoff. Die Meßwerte sind in der Tabelle 2 angegeben.

**Tabelle 2**

| Probe | $Hc_{1,6}$ | Mm/$\rho$ | Mr/$\rho$ | SFD |
|-------|-----------|-----------|-----------|------|
| 1AM | 31,2 | 182 | 75 | 0,61 |
| 1AMP | 34,1 | 155 | 65 | 0,61 |
| 1BM | 33,5 | 166 | 69 | 0,62 |
| 1BMP | 33,8 | 162 | 67 | 0,61 |

## Beispiel 3

In der im Beispiel 1 beschriebenen Glasapparatur wurden 1075 g $FeSO_4.7 H_2O$ und 223,8 g $CoSO_4.7 H_2O$ unter Rühren mit Wasser zu einem Gesamtvolumen von 6 l-Lösung aufgelöst und zusätzlich mit 3,2 ml konz. $H_2SO_4$ sowie danach mit 5,4 g $NaH_2PO_4.2 H_2O$ versetzt. Unter Einleiten von 300 Nl Stickstoff/h wurde auf 40°C erwärmt. Dann wurden 1333 ml einer 15,3 %-igen NaOH innerhalb 5 Minuten hinzugegeben. Der Ausfällgrad betrug 67 %, bezogen auf Me (II). Nun wurden anstelle von Stickstoff 600 Nl Luft/h eingeleitet, bis nach 205 Minuten der pH-Wert auf kleiner als 4 abgefallen war. Anstelle von Luft wurden nun erneut 300 Nl $N_2$/h eingeleitet, 74,6 g $CoSO_4.7 H_2O$ gelöst in 200 ml Wasser hinzugefügt und 10 Minuten nachgerührt. Mit konzentrierter NaOH wurde jetzt der pH-Wert auf 12 angehoben und dann die Suspension innerhalb 2 Stunden auf 80°C erhitzt. Das Reaktionsgemisch wurde unter Stickstoff 3 Stunden lang auf dieser Temperatur gehalten und dann auf 22°C abgekühlt.

Danach wurde die Hälfte des Volumens der Suspension aus dem 10 l-Glasgefäß abgezogen, filtriert, gewaschen und wie im Beispiel 1 beschrieben getrocknet (Probe 2A). Anschließend wurde die Probe 2A bei 320°C innerhalb von 30 Minuten mit Luft oxidiert (Probe 2B).

Zu der im 10 l-Gefäß verbliebenen Suspension wurde unter weiterem Rühren und Einleiten von 300 Nl $N_2$/h bei 22°C eine Wasserglaslösung entsprechend 1,2 Gew.-% Si, bezogen auf die Menge an $(Co_xFe_{1-x})O[Fe_2O_3]$ eingebracht. Dann wurde 1 Stunde nachgerührt, filtriert, gewaschen und der Filterkuchen bei 80°C im Vakuum getrocknet (Probe 2C).

5 g der Probe 2C wurden in einem Glasdrehrohr innerhalb von 8 Stunden mit 30 Nl $H_2$/h bei 380°C zum pyrophoren Metallpigment (Probe 2D) reduziert.

Die Passivierung das Pulvers erfolgte anschließend durch Benetzen der Probe mit Aceton in Gegenwart von Luftsauerstoff (Probe 2E).

**Tabelle 3**

| Probe | Typ | $Hc_{1,2}$ | bzw. $Hc_{1,6}$ | Mm/$\rho$ | Mr/$\rho$ | SFD |
|-------|-----|-----------|-----------------|-----------|-----------|------|
| 2A | $(Co_{0,63}Fe_{0,37})O[Fe_2O_3]$ | 65,8 | | 65 | 37 | 0,68 |
| 2B | oxidierte Form | 116,0 | | 58 | 40 | 0,60 |
| 2C | Oxid + 1,2 % Si | 70,9 | | 65 | 37 | 0,56 |
| 2D | Metall pyrophor | | 53,8 | 192 | 106 | 0,70 |
| 2E | Metall passiviert | | 57,0 | 164 | 93 | 0,75 |

## Beispiel 4

In der im Beispiel 1 beschriebenen 10 l-Glasapparatur wurden 1112 g $FeSO_4.7 H_2O$ mit Wasser zu 6 l-Lösung aufgelöst. Unter Rühren wurden 3,2 ml konz. $H_2SO_4$ und danach 5,4 g $NaH_2PO_4.2 H_2O$ hinzugefügt. Gleichzeitig wurde die Lösung mit 300 Nl/h Stickstoff begast und die Temperatur auf 20°C geregelt. Danach wurden 1235 ml einer 15 %-igen NaOH innerhalb 5 Minuten hinzugegeben. Dies entsprach einem Ausfällgrad von 70 % bezogen auf Me(II) Nun wurde anstelle von $N_2$ 600 Nl Luft/h bei 20°C eingeleitet, bis nach 260 Minuten der pH-Wert auf kleiner als 4 abgefallen war. Anstelle von Luft wurde nun erneut $N_2$ eingeleitet und 167,8 g $CoSO_4$.7 $H_2O$, gelöst in 200 ml Wasser eingebracht. Mit NaOH wurde dann der pH auf 12 gestellt, die Suspension unter $N_2$ auf 68°C erhitzt und 3 Stunden bei dieser Temperatur gehalten. Nach dem Abkühlen auf 22°C wurde filtriert, mit Wasser gewaschen und der Filterkuchen bei 50°C im Vakuumtrockenschrank getrocknet (Probe 3A $(Co_{0,36}Fe_{0,64})O[Fe_2O_3]$).

100 g der Probe 3A wurden innerhalb von 30 Minuten bei 360°C mit 50 Nl Luft/h zur Probe 3B oxidiert.

**Tabelle 4**

| Probe | $Hc_{1,2}$ | $Mm/\rho$ | $Mr/\rho$ | SFD |
|-------|-----------|-----------|-----------|------|
| 3A | 56,0 | 87 | 52 | 0,55 |
| 3B | 104,0 | 74 | 59 | 0,52 |

**Beispiel 5**

In einer mit 100 Teilen Stahlkugeln (2 mm Durchmesser) gefüllten Kugelmühle mit einem Füllvolumen von 250 Volumenteilen, wurden 50 Teile des magnetischen Eisenoxids, gemäß Beispiel 1, Probe 1 C, 3 Teile eines langkettigen amphoteren, organophilen Dispergiermittels, 0,05 Teile eines Siliconöles und 0,5 Teile eines isomeren Carbonsäuregemisches mit einem Fließpunkt <5°C, 6,6 Teile eines handelsüblichen isocyanatfreien Polyesterurethans aus Adipinsäure, Butandiol-1,4 und 4,4-Dicyanatodiphenyl-methan mit einem K-Wert von 61 (gemessen 1 %-ige Lösung in Tetrahydrofuran) und 25 Teile eines Vinylchlorid-Maleinsäureethylester-Copolymeren mit einem K-Wert von 59 (ebenfalls als 1 %-ige Lösung in Tetrahydrofuran gemessen), sowie 78 Teile eines Gemisches aus gleichen Teilen von Tetrahydrofuran und 1,4-Dioxan zugegeben, wobei die Eingaben der angegebenen Bindemittel in Form ihrer Lösungen in dem genannten Lösemittelgemisch erfolgte. Nach einer Dispergierdauer von 3,5 Stunden wurde die Magnetdispersion filtriert und anschließend mit einer üblichen Beschichtungseinrichtung auf eine 12 μm dicke Polyethylenterephthalatfolie gegossen, so daß nach Trocknung in einem Trockenkanal und anschließendem Glättvorgang mit auf 80°C beheiztem Mehrwalzenkalander eine Schichtdicke von 4,6 μm erzielt wurde. Die an der Magnetschicht gemessenen magnetischen Eigenschaften sind:

| | | |
|---|---|---|
| $H_c$ [kA/m] | : | 51,5 |
| $M_r$ [mT] | : | 143 |
| $M_m$ [mT] | : | 173 |
| $M_r/M_m$ | : | 0,83 |
| SFD | : | 0,28 |

**Patentansprüche**

1. Verfahren zur Herstellung kobalthaltiger, isotroper magnetischer Eisenoxide der Formel $(Co_xFe_{1-x})O[Fe_2O_3]$ mit Werten für x von 0,08 bis 0,8, dadurch gekennzeichnet, daß α-FeOOH in wäßriger Suspension mit Co(II)-Ionen und Fe(II)-Ionen bei pH-Werten von größer 9 unter Inertgas bei Temperaturen zwischen 50°C und dem Siedepunkt der Suspension bei Normaldruck umgesetzt wird.

2. Verfahren nach Anspruch 1, dadurch gekennzeichnet, daß frisch hergestelltes kobaltfreies α-FeOOH in seiner salzhaltigen Herstellsuspension mit Co(II)-Ionen und Fe(II)-Ionen bei pH-Werten von größer 9 unter Inertgasen bei Temperaturen zwischen 50°C und dem Siedepunkt der Suspension bei Normaldruck umgesetzt wird.

3. Verfahren gemäß Anspruch 1, dadurch gekennzeichnet, daß frisch hergestelltes kobalthaltiges α-FeOOH in seiner salzhaltigen Herstellsuspension mit Fe(II)-Ionen und gegebenenfalls zusätzlichen Co(II)-Ionen bei pH-Werten von größer 9 unter Inertgasen bei Temperaturen zwischen 50°C und dem Siedepunkt der Suspension bei Normaldruck umgesetzt wird.

4. Verwendung der gemäß einem der Ansprüche 1 bis 3 hergestellten kobalthaltigen, isotropen magnetischen Eisenoxide zur Herstellung von magnetischen Aufzeichnungsträgern.

**0 147 709**

**Claims**

1. A process for the preparation of a cobalt-containing isotropic magnetic iron oxide of the formula $(Co_xFe_{1-x})O[Fe_2zO_3]$ where x is from 0.08 to 0.8, wherein $\alpha$-FeOOH in aqueous suspension is reacted with Co(II) ions and Fe(II) ions at a pH of above 9, under an inert gas, at from 50°C to the boiling point of the suspension at atmospheric pressure.

2. A process as claimed in claim 1, wherein freshly prepared cobalt-free $\alpha$-FeOOH in its salt-containing suspension from its preparation is reacted with Col(II) ions and Fe(II) ions at a pH of above 9, under an inert gas, at from 50°C to the boiling point of the suspension at atmospheric pressure.

3. A process as claimed in claim 1, wherein freshly prepared cobalt-containg $\alpha$-FeOOH in its salt-containing suspension from its preparation is reacted with Fe(II) ions and, if desired, additional Co(II) ions at a pH of above 9, under an inert gas, at from 50°C to the boiling point of the suspension at atmospheric pressure.

4. Use of a cobalt-containing isotropic magnetic iron oxide prepared according to any of claims 1 to 3 for the production of magnetic recording media.

**Revendications**

1. Procédé de préparation d'oxydes de fer magnétiques, isotropes, à teneur en cobalt, de formule $(Co_xFe_{1-x})O[Fe_2O_3]$ de valeurs pour x allant de 0,08 à 0,8, caractérisé par le fait que l'on fait réagir du $\alpha$-FeOOH, en suspension aqueuse, avec des ions Co(II) et des ions Fe(II), à des pH supérieurs à 9, sous gaz inerte, à des températures comprises entre 50°C et le point d'ébullition de la suspension et sous pression normale.

2. Procédé selon la revendication 1, caractérisé par le fait que l'on fait réagir du $\alpha$-FeOOH sans cobalt, fraîchement préparé, dans sa suspension de préparation saline avec des ions Co(II) et des ions Fe(II), à des pH supérieurs à 9, sous gaz inerte, à des températures comprises entre 50°C et le point d'ébullition de la suspension et sous pression normale.

3. Procédé selon la revendication 1, caractérisé par le fait que l'on fait réagir du $\alpha$-FeOOH à teneur en cobalt, fraîchement préparé, dans sa suspension de préparation saline, avec des ions Fe(II) et éventuellement des ions Co(II) additionnels, à des pH supérieurs à 9, sous gaz inerte, à des températures comprises entre 50°C et le point d'ébullition de la suspension et sous pression normale.

4. Utilisation des oxydes de fer magnétiques, isotropes, à teneur en cobalt, préparés selon l'une des revendications 1 à 3, pour la fabrication de supports d'enregistrement magnétique.